# EUROPEAN PATENT APPLICATION

(11) **EP 2 189 077 A1**
(43) Date of publication of application: **26.05.2010**
(21) Application number: 09252650.8
(22) Date of filing: 19.11.2009
(51) Int. Cl.: A44C 15/00, A61C 7/12

(54) **Orthodontic apparatus and othodontic member**

(30) Priority: 21.11.2008 US 116766 P
(71) Applicant: ORMCO CORPORATION, Orange, CA 92867 (US)
(72) Inventor: Mohr, Jason A., Fontana, CA 92336 (US); Sirney, Ronald J., Alta Loma, CA 91701 (US)
(74) Representative: Findlay, Alice Rosemary

(57) **Abstract**

An orthodontic apparatus 10, 100, 200, 300, 330 includes an orthodontic bracket 12, 102 and an orthodontic member 16, 104, 204, 302, 332 removably coupled thereto. The orthodontic member 16, 104, 204, 302, 332 includes an engaging member 56, 58, 118, 120, 208, 210, 304 configured to engage a tie wing 42a, 42b, 42c, 42d, 110, 112a, 112b of the bracket 12, 102 in non-contact relation with the archwire 20 such that the member 16, 104, 204, 302, 332 exerts no active forces on the archwire 20. A bumper 62, 130, 326 extends from the engaging member 56, 58, 118, 120, 304 so as to cover a side of the bracket 12, 102 and thereby prevent or reduce contact between the bracket 12, 102 and opposing teeth. The orthodontic member 16, 104, 204, 302, 332 may include a support pad 68 and/or nubs 122a, 122b, 212a, 212b for limiting movement of the member 104, 204 relative to the bracket 102. The orthodontic member 16, 104, 204, 302, 332 may also include decorative elements 72 for aesthetic purposes.

## Description

This invention is generally related to an orthodontic apparatus and orthodontic member and, more particularly, to an orthodontic apparatus and member for use with orthodontic brackets.

Orthodontic brackets represent a principal component of corrective orthodontic treatments devoted to improving a patient's occlusion. In conventional orthodontic treatments, an orthodontist or an assistant affixes brackets to the patient's teeth and engages an archwire into a slot of each bracket. The archwire applies corrective forces that coerce the teeth to move into orthodontically correct positions. Traditional ligatures, such as small elastomeric O-rings or fine metal wires, are employed to retain the archwire within each bracket slot. To this end, ligatures of this type are often used to actively engage one or more tie wings of the bracket and the archwire to retain the archwire in the slot and prevent relative motion between the bracket and archwire. By retaining the archwire therein, the archwire may apply predetermined directional forces to the bracket, and thus the tooth, to bring the tooth into proper position.

Brackets may be positioned on the labial or lingual surface of the tooth in close proximity to the occlusal plane. However, the position may create concerns in cases where a clinician has to treat a patient exhibiting a type of malocclusion in which one or more teeth on the opposing arch contacts the bracket when the patient's jaws close. In this situation, where a tooth contacts a bracket, the contact between the two may wear away the tooth enamel at the area of contact. In order to prevent any damage to the tooth that may occur by such contact, bumpers may be secured to the brackets. The bumper is typically positioned occlusally of the bracket so as to be between the bracket and the opposing tooth. The bumper, therefore, is positioned to protect the tooth and the bracket. However, when secured to the bracket, these bumpers may contact or otherwise interfere with the archwire or may be designed to actively engage the archwire much like a traditional ligature. Thus, the bumpers can and often do introduce unwanted forces on the archwire that may, for example, prolong treatment or result in other undesirable effects on orthodontic treatment. Furthermore, these bumpers often fail to remain in place due to forces that normally occur during mastication. As a result, the bracket may become exposed to tooth contact during treatment not withstanding use of conventional bumpers.

There is, therefore, a need for an apparatus that includes an orthodontic member configured to be coupled to a bracket which does not interfere with the relative motion between the bracket and the archwire and which remains in place when exposed to normal mastication forces in the oral environment.

In one embodiment, an orthodontic member is provided for use with an orthodontic bracket having a tie wing and an archwire slot that is configured to receive an archwire therein. The orthodontic member includes a main body, an engaging member, and a nub. The main body is configured to cover at least a portion of the bracket when the orthodontic member is coupled to the bracket. The engaging member extends from the main body and is configured to engage the tie wing to removably couple the orthodontic member to the bracket. The nub extends from the main body and is configured to project into the archwire slot so as to be in non-contact relation with the archwire. When the archwire is positioned in the archwire slot and the orthodontic member is coupled to the bracket, the orthodontic member and the archwire are in non-contact relation with each other such that the orthodontic member exerts no active forces on the archwire.

In another embodiment, an orthodontic member is provided for use with an orthodontic bracket having a tie wing and an archwire slot that is configured to receive an archwire therein. The orthodontic member includes an engaging member that is configured to engage the tie wing to removably couple the orthodontic member to the bracket. The orthodontic member further includes a first bumper that extends from the engaging member and that is configured to cover a first side of the bracket. When the archwire is positioned in the archwire slot and the orthodontic member is coupled to the bracket, the orthodontic member and the archwire are in non-contact relation with each other such that the orthodontic member exerts no active forces on the archwire.

In another embodiment, an orthodontic apparatus for use with an archwire includes an orthodontic bracket that is configured to be mounted on a tooth, and an orthodontic member that is configured to be removably coupled to the bracket. The bracket includes a tie wing, an archwire slot that is configured to receive the archwire therein, and a movable closure member. The movable closure member is positionable relative to the archwire slot in an open position to allow insertion of the archwire therein, and in a closed position to capture the archwire within the archwire slot. The orthodontic member is decorative and comprises a main body being configured to cover at least a portion of said bracket when said decorative orthodontic member is coupled to said bracket; and an engaging member extending from said main body and being configured engage said tie wing to removably couple said decorative orthodontic member to said bracket, wherein when the archwire is captured in said archwire slot and said decorative orthodontic member is coupled to said bracket, said decorative orthodontic member and the archwire are in non-contact relation with each other such that said decorative orthodontic member exerts no active forces on the archwire.

The invention will now be further described by way of example with reference to the accompanying drawings, in which:

Fig. 1 is a perspective view of an orthodontic apparatus in accordance with an embodiment of the invention;

Fig. 1A is an enlarged side view of the encircled portion 1A of Fig.1;

Fig. 2 is a perspective, partially disassembled view of the orthodontic apparatus of Fig. 1;

Fig. 3 is a perspective, partially disassembled view of another embodiment of an orthodontic apparatus;

Fig. 4 is a perspective, partially assembled view of the orthodontic apparatus of Fig. 3;

Fig. 5 is a perspective, fully assembled view of the orthodontic apparatus of Figs. 3 and 4;

Fig. 5A is an enlarged side view of the encircled portion 5A of Fig. 5;

Fig. 6 is a perspective, partially assembled view of another embodiment of an orthodontic apparatus;

Fig. 7 is a perspective, partially disassembled view of the orthodontic apparatus of Fig. 6;

Fig. 8 is a perspective, fully assembled view of the orthodontic apparatus of Figs. 6 and 7;

Fig. 9 is a perspective, fully assembled view of another embodiment of an orthodontic apparatus;

Fig. 9A is an enlarged side view of the encircled portion 9A of Fig.9;

Fig. 10 is a perspective, partially disassembled view of the orthodontic apparatus of Fig. 9; and

Fig. 11 is a perspective, partially disassembled view of another embodiment of an orthodontic apparatus.

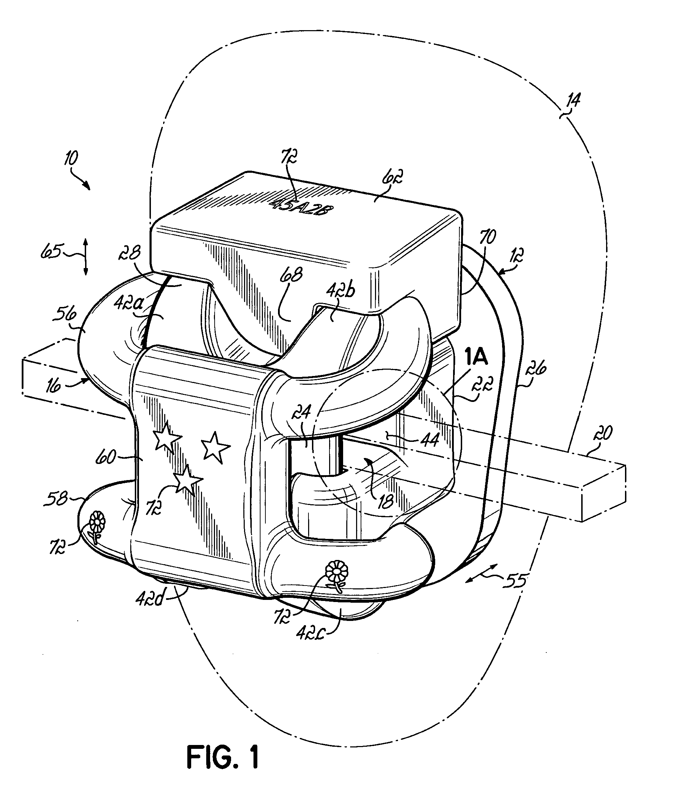

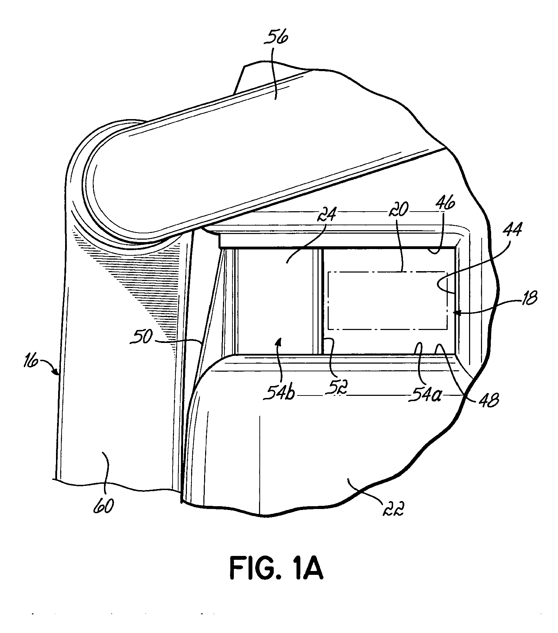

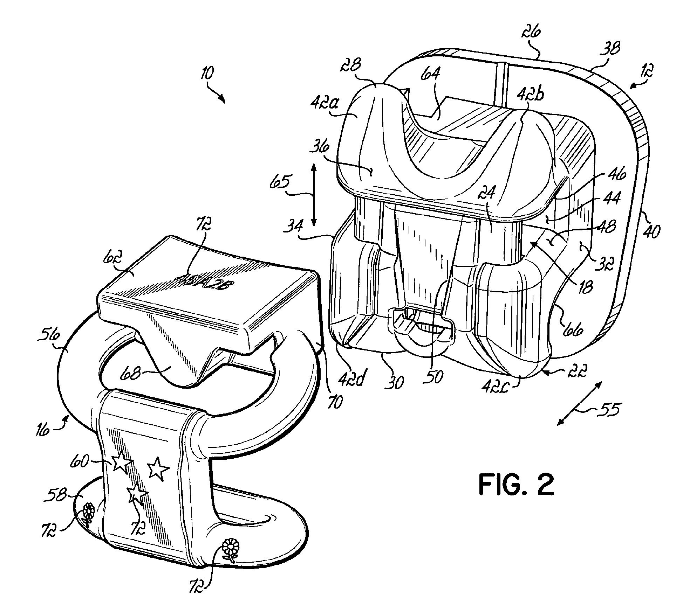

With reference to the figures and, more particularly, to Figs. 1 and 2, an orthodontic apparatus 10 includes a bracket 12 configured to be mounted to a tooth 14 (shown in phantom) and an orthodontic bite bumping apparatus, bite bumper, or simply an orthodontic member 16 configured to be secured to the bracket 12. The bracket 12 has an archwire slot 18 that is configured to receive an archwire 20 (shown in phantom) therein. As is known in the art, the archwire 20 and bracket 12 are used in orthodontic treatment to apply corrective forces to the tooth 14 to bring it into the correct orthodontic position. As shown in Fig. 1 and described in more detail below, when the orthodontic member 16 is coupled to the bracket 12, the orthodontic member 16 prevents or reduces the likelihood of contact between portions of the bracket 12 and objects, such as food, surrounding tissues, and/or the patient's teeth on the opposing jaw (not shown), during normal mastication. Furthermore, the orthodontic member 16 does not interfere with or alter the relative movement between the bracket 12 and the archwire 20 or otherwise effect the forces exerted on the bracket 12 by archwire 20.

The orthodontic apparatus 10, unless otherwise indicated, is described herein using a reference frame with the apparatus 10 attached to a labial surface of a tooth on the lower jaw. Consequently, as used herein, terms such as labial, lingual, mesial, distal, occlusal, and gingival used to describe the apparatus 10 are relative to the chosen reference frame. The embodiments of the invention, however, are not limited to the chosen reference frame and descriptive terms, as the orthodontic apparatus 10 may be used on other teeth and in other orientations within the oral cavity. For example, the apparatus 10 may also be located on a tooth in the upper jaw or maxilla and be within the scope of the invention. Those of ordinary skill in the art will recognize that the descriptive terms used herein may not directly apply when there is a change in reference frame. Nevertheless, the invention is intended to be independent of location and orientation within the oral cavity and the relative terms used to describe embodiments of the apparatus are to merely provide a clear description of the examples in the drawings. As such, the relative terms labial, lingual, mesial, distal, occlusal, and gingival are in no way limiting the invention to a particular location or orientation.

With reference to Fig. 2, the bracket 12 includes a body 22 and a movable closure member, such as ligating slide 24, for captivating the archwire 20 (shown in Fig. 1) within the archwire slot 18. While self-ligating brackets (i.e., those that utilize a latch, clip, or ligating slide to keep the archwire in the archwire slot) are shown and described herein, embodiments of the invention may include orthodontic brackets that are not self-ligating, i.e. those brackets that may rely on other features to capture the archwire in the archwire slot. With reference specifically to the body 22, when the body 22 is mounted to the labial surface of a tooth carried on the patient's lower jaw, the body 22 has a lingual side 26, an occlusal side 28, a gingival side 30, a mesial side 32, a distal side 34, and a labial side 36. The lingual side 26 of the body 22 is configured to be secured to the tooth in any conventional manner, including for example, by an appropriate orthodontic cement or adhesive or by a band around an adjacent tooth (not shown).

As shown best in Fig. 2, the lingual side 26 may further be provided with a pad 38 that defines a bonding base 40 adapted to be secured to the surface of the tooth 14. The pad 38 may or may not be integrally formed with the bracket 12. The body 22 may further include one or more tie wings. As shown best in Fig. 2, in one embodiment the bracket 12 may be formed with two occlusal tie wings 42a, 42b projecting from the occlusal side 28 and two gingival tie wings 42c, 42d projecting from the gingival side 30. The tie wings 42a-42d permit coupling of other orthodontic elements such as, ligatures, power chains, among others, to the body 22.

With further reference to Fig. 2, the body 22 includes a base surface 44 and a pair of opposed slot surfaces 46, 48 projecting labially from the base surface 44 that collectively define the archwire slot 18 in the body 22. The archwire slot 18 extends in a mesial-distal direction from mesial side 32 to distal side 34 of the body 22 and may be configured to receive the orthodontic archwire 20 in any suitable manner.

With reference to Figs. 1 and 1A, the ligating slide 24 has a labial side 50 and a lingual side 52. The ligating slide 24 is movable between an open position to allow the clinician to insert the archwire 20 into the archwire slot 18 and a closed position (the ligating slide 24 is in the closed position in Figs. 1, 1A, and 2) to retain the archwire 20 in the archwire slot 18 during treatment. With continued reference to Fig. 1A, while the ligating slide 24 is in the closed position, a portion of the lingual side 52 opposes the base surface 44 to form a boundary or encasing portion 54a. That is, portions of the lingual side 52, opposed surfaces 46, 48 and base surface 44 form a four-sided boundary that defines the encasing portion 54a relative to a portion of archwire 20. During treatment, the archwire 20 may contact one or more of the base surface 44, the opposed slot surfaces 46, 48, and the lingual side 52 of the ligating slide 24. In addition, the archwire 20 has cross-sectional dimensions that are generally less than the corresponding cross-sectional dimensions of the encasing portion 54a, as shown. In this way, the archwire 20 is not tightly restrained in encasing portion 54a, but instead may move relative to bracket 12 depending on the particular orthodontic treatment.

In contrast to the encasing portion 54a, and with reference to Fig. 1A, bracket 12 also defines a non-encasing portion 54b which refers to portions of the archwire slot 18 other than the encasing portion 54a and which is in non-contact relation with the archwire 20 when the ligating slide 24 is in the closed position. For example, in the exemplary embodiment of Fig. 1A, when the ligating slide 24 is in the open position, the clinician may pass the archwire 20 through the non-encasing portion 54b and into the encasing portion 54a. However, when the ligating slide 24 is closed, the archwire 20 may contact the surfaces defining the encasing portion 54a but not contact portions of non-encasing portion 54b.

As set forth above and in one embodiment, the orthodontic member 16 is configured to releasably couple to the bracket 12 and, when coupled to bracket 12, prevents or reduces the likelihood of contact between bracket 12 and opposing teeth. To this end, in one exemplary embodiment shown in Fig. 1, the orthodontic member 16 includes a pair of engaging members extending from a main body 60 (described in more detail below) of the orthodontic member 16 and which is configured to permit releasable coupling of the orthodontic member 16 with bracket 12. For example, in one embodiment, the engaging members may include a pair of stretchable closed loops 56, 58 as illustrated in Fig. 1.

With continued reference to Fig. 1, in one embodiment of the invention, the orthodontic member 16 includes a bumping member or bumper 62 that extends therefrom. For instance, the bumper 62 may extend from the first closed loop 56, as shown. When bracket 12 is mounted onto the tooth 14 and the orthodontic member 16 is coupled with bracket 12, the bumper 62 extends in the buccal-lingual direction (arrow 55) and is positioned generally occlusally of bracket 12. Specifically, for example, the bumper 62 may cover or overlie the tie wings 42a and 42b or another occlusal-most portion of the body 22. In other words, the bumper 62 covers the occlusal side 28 of the bracket 12 to prevent or reduce the likelihood of objects approaching from the occlusal direction (in particular a tooth on the opposing jaw) from contacting the bracket 12. Rather than a potentially-damaging, object-bracket contact, the opposing tooth or object comes into contact with the orthodontic member 16, and specifically the bumper 62, thereby preventing or reducing the amount of damage to the opposing tooth and/or the bracket 12.

In this aspect, the bumper 62 may made of a suitably chosen material to provide comfort to the patient as well as durability sufficient to withstand repeated contact. For example, and without limitation, bumper 62 may be made from an elastomeric polyurethane-based material and may further be injection-molded according to methods known in the art to conform to the shape of the bracket 12. Bumper 62 may be formed integrally with one or more of the closed loops 56, 58 and the main body 60. However, it is contemplated for the bumper 62 to be a separate element which is coupled to the orthodontic member 16. With continued reference to Figs. 1, 1A, and 2, the bumper 62 of this exemplary embodiment has a generally continuous rectangular cross-sectional shape (when viewed in the occlusal-gingival direction of arrow 65). However, the bumper 62 may have other shapes. For example, the bumper 62 may be made of multiple portions separate and/or spaced from one another or even have a single portion (like bumper 62) but have an opening, irregularity or other structure such that the bumper has a non-continuous shape.

In order to keep the bumper 62 positioned on the occlusal side 28 of the bracket 12, each of the closed loops 56, 58 may be stretched around one or more tie wings, such as opposing pairs of tie wings 42a, 42b and 42c, 42d. The orthodontic member 16 may engage an underside portion of each of the tie wings 42a, 42b, 42c, 42d, such as along recesses 64, 66 of the body 22 (shown best in Fig. 2). In this regard, when so coupled, the closed loops 56, 58 prevent or otherwise limit substantial buccal-lingual movement (as indicated by arrow 55) of the orthodontic member 16 relative to bracket 12 such that the bumper 62 remains positioned substantially occlusally of the bracket 12. Additionally, the elasticity of the closed loops 56, 58 permits the loops to tightly engage the tie wings 42a, 42b, 42c, 42d so as to resist rotation of member 16 relative to bracket 12. In this regard, the closed loops 56, 58 are pivotally bendable relative to the main body 60 to facilitate engagement of the underside portions of the tie wings 42a, 42b, 42c, 42d as the member 16 is installed onto bracket 12. The closed loops 56, 58 thereby restrict or limit (i.e., prevents or at least minimizes) rotation of member 16 relative to bracket 12. Thus, the closed loops 56, 58 reduce the probability that the bumper 62 may slide around to the mesial side 32 or distal side 34 of the body 22, or otherwise expose the occlusal side 28 of the bracket 12.

In addition, as described above, when the orthodontic member 16 is coupled to the bracket 12, as shown best in Fig. 1A, the closed loops 56, 58 are in a non-interfering relation with the encasing portion 54a of the archwire slot 18. More specifically, each of the closed loops 56, 58 may be positioned such that the closed loops 56, 58 do not exert active forces on the archwire 20 as the archwire extends from the mesial or distal sides 32, 34 of the body 22. Accordingly, the engagement of the orthodontic member 16 with bracket 12 does not alter relative movement that would exist between the bracket 12 and the archwire 20 by exerting drag or frictional-type forces on the archwire 20 during the orthodontic treatment. In this regard, in one embodiment, the member 16 is configured to be in non-contact relation with the archwire 20 during orthodontic treatment. This may be referred to as "passive ligation" as opposed to "active ligation," where an orthodontic member (e.g., ligature, o-ring, etc.) imposes a force on the archwire 20 to force the archwire toward the base surface 44 of archwire slot 18, for example. Therefore, unlike ligatures used to actively force and hold an archwire in an archwire slot, as are generally known in the art, the orthodontic member 16 may be particularly useful when passive ligation is desired (i.e., where the bracket 12 and the archwire 20 are permitted to move relative to each other without significant interference). For example, in some orthodontic treatments, passive ligation is particularly desirable during the early stages of treatment.

Although the orthodontic member 16 is shown with two engaging members formed as closed loops, embodiments of the invention are not so limited. For example, in one alternative embodiment, the orthodontic member 16 may have a single engaging member (e.g., a single closed loop). Further, it is contemplated that in alternative embodiments, the engaging members may take forms other than closed loops, such as hooks or J-shaped engaging members (not shown). Moreover, it is also contemplated that the closed loops 56, 58, hooks, J-shaped members, etc. may have sizes and/or shapes different from one another.

As set forth above and with reference to Fig. 1, in certain classes of malocclusions, the opposing teeth (not shown) may contact the bumper 62. The bumper 62 therefore is configured to protect the opposing teeth as well as the structural integrity of the bracket 12. When such contact is made, the bumper 62 remains in position as set forth above and, to that end, may be supported against the bracket 12. For example, in one embodiment a body portion or support pad 68 protrudes gingivally from bumper 62. In this embodiment, when the bumper 62 is forcibly contacted from the occlusal direction, the support pad 68 engages the occlusal side 28 of the bracket 12 to distribute the contact load across the occlusal side 28 of bracket 12. The support pad 68 may reduce the compression and/or deformation of the bumper 62 by spreading the load across more surface area of the body 22.

As shown, the support pad 68 may be shaped to conform to the shape of the occlusal side 28 of the body 22. For instance, the support pad 68 may be shaped to fill the space between occlusal tie wings 42a, 42b, as shown. In addition to supporting the bumper 62 against the body 22, the conforming shape of the support pad 68 may also keep the member 16 from moving mesially or distally to such a degree that would expose the occlusal side 28 of the bracket 12, and particularly, expose one of the occlusal tie wings 42a, 42b. The support pad 68 may include a mesial-distal portion 70 that fills residual space between the occlusal tie wings 42a, 42b and the pad 38 that is not otherwise occupied by the closed loop 56. The mesial-distal portion 70 may further limit movement of the bumper 62 in the labial-lingual direction. In one aspect, a malocclusion that may cause contact between the bracket 12 and an opposing tooth may be treated more quickly (i.e., shorter treatment time) due to a reduction or elimination of damage to the bracket 12 and, as a consequence, the time required to replace damaged and non-functional brackets.

As shown in Fig. 1, the orthodontic member 16 may include decorative elements such as colors and/or decorative prints (e.g., numbers, letters, stars, or flowers, among others) associated with an outward, visible surface of the member 16. In this regard, different portions of member 16 may include colors that are different from one another. Further, member 16 may include identifying indicia on its surface (e.g., numbers, letters, other characters or symbols or combinations thereof) permitting identification of the particular member 16 and/or identification of a particular combination of member 16 and bracket 12 (or other type of bracket). The decorative elements and identifying indicia are generally assigned the numeral 72. These may be present in any number and/or combination and may be located anywhere on the member 16. For example, and without limitation, these decorative elements and/or identifying indicia may be located on one or more of the closed loops 56, 58, main body 60, and/or bumper 62.

While the embodiment of Figs. 1, 1A, and 2 includes a member 16 having a single bumper 62, it is contemplated that alternative embodiments may include additional bumpers having the same or different size and/or shape as the first bumper 62. By way of example and without limitation, an alternative embodiment (not shown) may include the same structure as member 16, but additionally have a second bumper similar to first bumper 62 positioned oppositely therefrom (i.e., gingivally of bracket 12 when coupled thereto) configured to prevent or reduce the likelihood of contact between bracket 12 and other parts of the mouth, especially surrounding tissue. This second bumper may, for example, be desirable with patients having tight musculature or a tight orbicularis oris to provide comfort to the patient during the orthodontic treatment period.

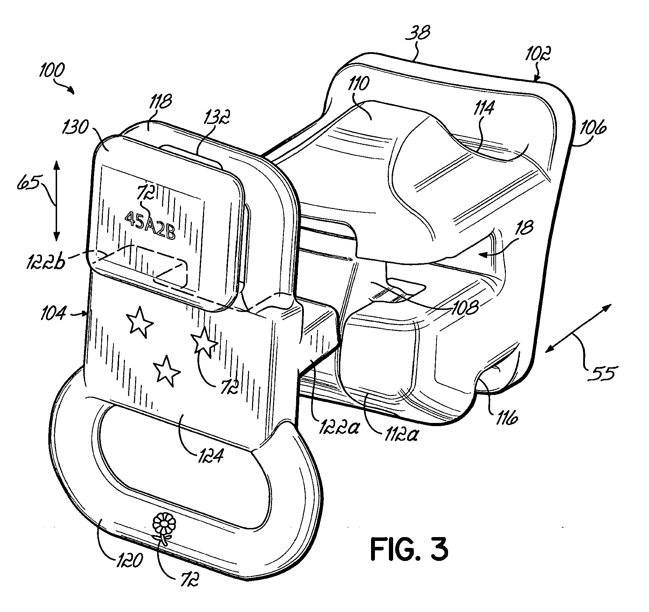

With reference to Figs. 3, 4, 5, and 5A, in which like reference numerals refer to like features in Figs. 1, 1A, and 2, another embodiment of an orthodontic apparatus 100 includes a bracket 102 and a bite bumper or an orthodontic member 104 similar in many respects to the bracket 12 and member 16 of Figs. 1, 1A, and 2, the description of which may be referred to for an understanding of the structure, material, and functions of apparatus 100 as well. In one embodiment of the orthodontic apparatus 100, the bracket 102 includes a body 106 and a movable closure member, such as ligating slide 108 (shown in the closed position). However, as is set forth above, the bracket 102 may not include such a movable closure member. As shown best in Fig. 3, the body 106 has a single occlusal tie wing 110 and a pair of gingival tie wings 112a, 112b. An occlusal recess 114 is formed between the occlusal tie wing 110 and the pad 38, and a gingival recess 116 is formed between the gingival tie wings 112a, 112b and the pad 38.

In one embodiment of the invention, the orthodontic member 104 includes two closed loops 118, 120 that are sized differently from one another to facilitate engagement to a single occlusal tie wing 110 and an opposed pair of gingival tie wings 112a, 112b of the body 106. In this regard, closed loop 118 is smaller than closed loop 120 such that closed loop 118 fits within or engages an underside portion of the occlusal tie wings 110, e.g., such as along occlusal recess 114, and closed loop 120 fits within or engages the underside portion of gingival tie wings 112a, 112b, e.g., such as along gingival recess 116.

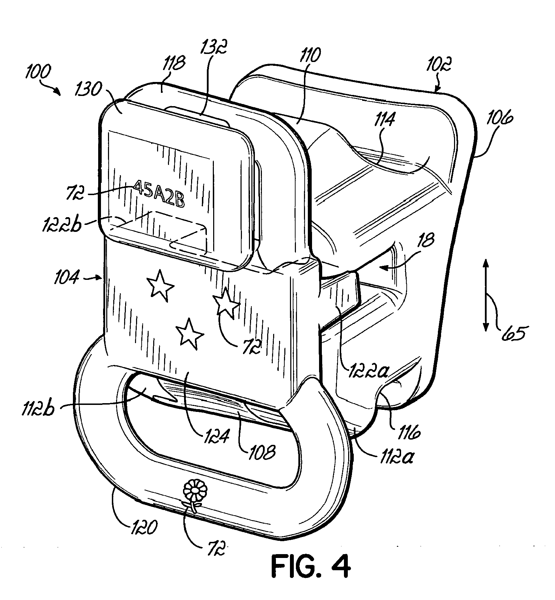

With reference to Fig. 3, in another embodiment, the bite bumper or orthodontic member 104 includes a pair of nubs 122a, 122b that extend from a main body 124 of the member 104, generally in a buccal-lingual direction (arrow 55). As shown in Figs. 3 and 4, the nubs 122a, 122b may be spaced apart to straddle the ligating slide 108 and may be sized to be inserted into the archwire slot 18 when the member 104 is secured or otherwise coupled to the bracket 102. Once inserted into the archwire slot 18, the nubs 122a, 122b restrict or limit (i.e., prevent or at least minimize) rotation or twisting of the member 104 in a plane substantially parallel to the main body 124. The nubs 122a, 122b also resist sliding movement of the orthodontic member 104 in the occlusal-gingival direction (illustrated by arrow 65) caused by repeated movement of the buccal mucosa, as well as food or other matter in the oral cavity, across the surface of the main body 124 during normal mastication. Further, when nubs 122a, 122b straddle the slide 108, the nubs 122a, 122b may also limit mesial-distal motion. To that end, nubs 122a, 122b extend into the archwire slot 18 and are sized and shaped to fit snugly therein. For example, the nubs 122a, 122b may be formed from a resilient, but elastically deformable, material such that the nubs 122a, 122b may be compressed as they are inserted into the archwire slot 18. Furthermore, the nubs 122a, 122b cooperate with the tight coupling provided by the closed loops 118, 120 around bracket 102 to prevent or at least minimize relative rotation between the member 104 and the bracket 102.

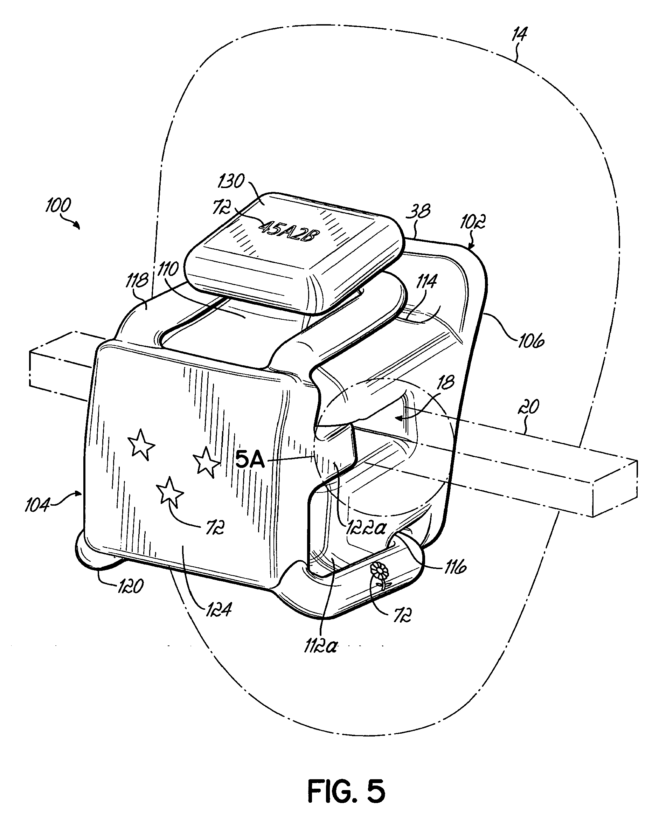

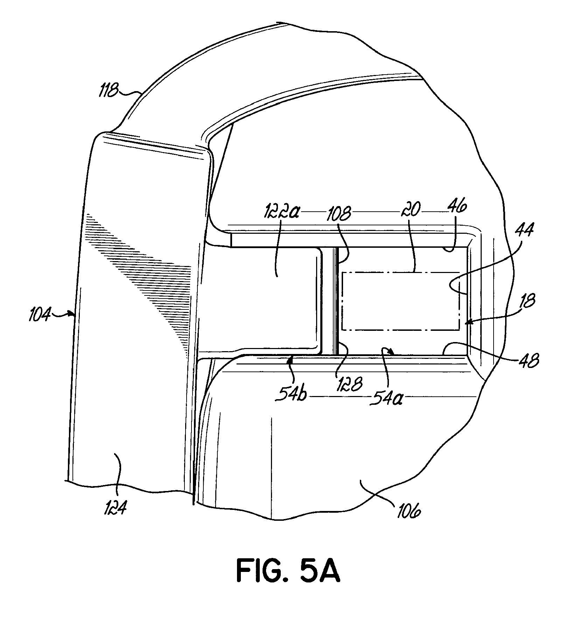

With reference to Fig. 5A, when member 104 is coupled with bracket 102, the nubs 122a, 122b extend only into the non-encasing portion 54b of the archwire slot 18. In this regard, therefore, a portion of lingual surface 128 of ligating slide 108 together with portions of the base surface 44, and opposed slot surfaces 46, 48, form four sides of the encasing portion 54a of archwire slot 18. The nubs 122a, 122b stay clear of the encasing portion 54a and therefore may not actively force, hold, or touch the archwire 20 in the slot 18 in a manner that alters the movement of the archwire 20 relative to the bracket 102. In addition, the closed loops 118, 120 may be positioned such that they do not exert active forces on the archwire 20 as the archwire extends from the mesial or distal sides 32, 34 of the body 106. Thus, the orthodontic member 104 does not exert drag forces or frictional-type forces on the archwire 20 during the orthodontic treatment in a manner that alters relative movement between the bracket 12 and the archwire 20. In one embodiment, the orthodontic member 104 may be configured to be in non-contact relation with the archwire 20 when coupled to a bracket during orthodontic treatment.

With reference to Fig. 5, during such deployment, following insertion of the nubs 122a, 122b into the archwire slot 18, each of the closed loops 118, 120 may be stretched about each of the tie wings 110, 112a, 112b for engagement with the corresponding underside portions (e.g., recesses 114, 116). The nubs 122a, 122b keep the main body 124 substantially in a fixed position. This may be particularly desirable, for example, when closed loops 118, 120 must be stretched to different extents relative to one another to engage alternative brackets having recesses that are spaced at varying distances from the archwire slot 18.

In one embodiment, and with continued reference to Figs. 3, 4, 5, and 5A, a bumper 130 extends outwardly from loop 118 and may be connected to the loop 118 by one or more tabs 132 (one shown). The bumper 130 is similar in structure and function to bumper 62, set forth above. In this regard, therefore, the bumper 130 may be integrally formed with closed loop 118 or separately coupled to member 104. When the closed loop 118 is positioned in recess 114, the bumper 130 is configured to cover the occlusal tie wing 110 and may reside in contact therewith.

While the exemplary embodiment of the member 104 in Figs. 3-5 is illustrated with a single bumper 130, it is contemplated that alternative embodiments may include additional bumpers having the same size and/or shape as bumper 130 or a size and/or shape different from those shown. By way of example, and without limitation, the orthodontic member 104 may further include an additional or a second bumper (not shown) that may be similar to bumper 130. However, the second bumper may be connected to closed loop 120, such that it is positioned generally gingivally of bracket 102 when coupled thereto to prevent or reduce the likelihood of contact between bracket 102 and surrounding tissue. The second bumping member may, for example, be desirable for patients having tight musculature or a tight orbicularis oris as the second bumper may be more comfortable for patient during the orthodontic treatment.

Like the orthodontic member 16 of Figs. 1, 1A, and 2, orthodontic member 104 of Figs. 3, 4, and 5, may include decorative elements such as colors and/or decorative prints (e.g., numbers, letters, stars, flowers) associated with the surface of the member 104. In this regard, different portions of member 104 may include colors that are different from one another. Further, member 104 may include identifying indicia on its surface (e.g., numbers, letters, other characters or symbols or combinations thereof) permitting identification of the particular member 104 and/or identification of a particular combination of bite bumper 104 and bracket 102 (or other type of bracket). The decorative elements and identifying indicia are generally assigned the numeral 72. These may be present in any number and/or combination and may be located anywhere on the member 104. For example, and without limitation, these decorative elements and/or identifying indicia may be located on one or more of the closed loops 118, 120, main body 124, nubs 122a, 122b and/or bumper 130.

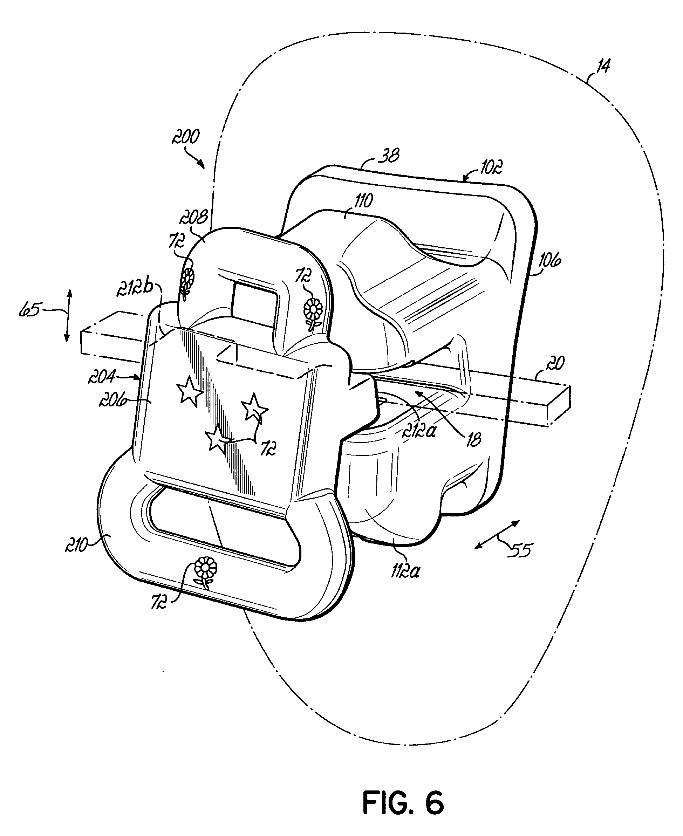

With reference to Figs. 6, 7, and 8, in another embodiment, an orthodontic apparatus 200 includes the bracket 102 (also shown in Figs. 3-5) and a decorative apparatus or decorative orthodontic member 204. Decorative member 204 is similar in structure and materials to orthodontic members 16, 104, set forth above. For ease of explanation, like reference numerals in Figs. 6, 7, and 8 refer to like features in Figs. 3, 4, 5, and 5A. Unlike orthodontic member 104, decorative member 204 does not include a bumper and therefore it has a primarily decorative or aesthetic function. However, a main body 206 of the decorative member 204 may provide some protection by blocking entry of food and debris into the archwire slot 18. The cover 206 may also provide some comfort for some patients.

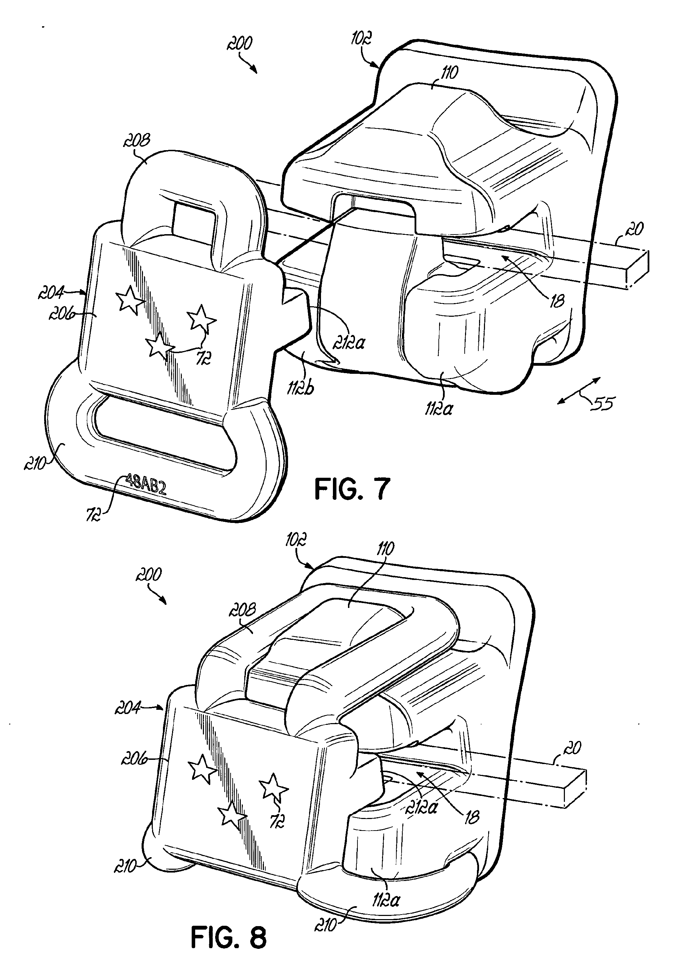

Similar to the nubs 122a, 122b shown for example in Fig. 3, the orthodontic member 204 may have nubs 212a, 212b that project from the main body 206. In the exemplary embodiment illustrated, the nubs 212a, 212b are configured to be positioned to straddle the ligating slide 108, shown best in Fig. 7. The nubs 212a, 212b may act to resist occlusal-gingival movement of the main body 206 when positioned in the archwire slot 18. In this aspect, the nubs 212a, 212b may simplify coupling the member 204 to the bracket 102. For example, the nubs 212a, 212b, when placed into the archwire slot 18, may act to stabilize the member 204 on the bracket 102 while the clinician positions closed loops 208, 210 over the occlusal tie wing 110 and the gingival tie wings 112a, 112b. Also, the nubs 212a, 212b may act to resist occlusal-gingival movement of the member 204 that is caused by passage of tissue, food, and other material across the surface of the main body 206.

As with the other orthodontic members 16, 104, when coupled with bracket 102, closed loops 208, 210 and nubs 212a, 212b and other portions of decorative member 204 are in a non-interfering relation with the encasing portion 54a of the archwire slot 18 (best shown in Fig. 8). As described above with regard to Fig. 1A, the closed loops 208, 210 do not exert drag or frictional forces that would tend to impede or alter the relative motion between the bracket 102 and the archwire 20. In other words, the closed loops 208, 210 result in coupling of the decorative member 204 with bracket 102 such that decorative apparatus exerts no active forces onto the archwire 20. Thus, the bracket 102 may move relative to the archwire 20 without interference from the member 204.

In accordance with one of its functions, the decorative member 204 may include decorative elements such as colors and/or decorative prints (e.g., numbers, letters, stars, flowers) associated with the surface of the decorative member 204. In this regard, different portions of decorative member 204 may include colors that are different from one another. Further, decorative member 204 may include identifying indicia on its surface (e.g., numbers, letters, other characters, or symbols or combinations thereof) permitting identification of the particular decorative member 204 and/or identification of a particular combination of decorative member 204 and a bracket. Decorative member 204 may, for example, be available in different colors to provide a selection of aesthetic choices for the decorative member 204, in accordance with a user's preferences. The decorative elements and identifying indicia are generally assigned the numeral 72. These may be present in any number and/or combination and may be located anywhere on the decorative member 204. For example, and without limitation, these decorative elements and/or identifying indicia may be located on one or more of the closed loops 208, 210, main body 206, and/or nubs 212a, 212b.

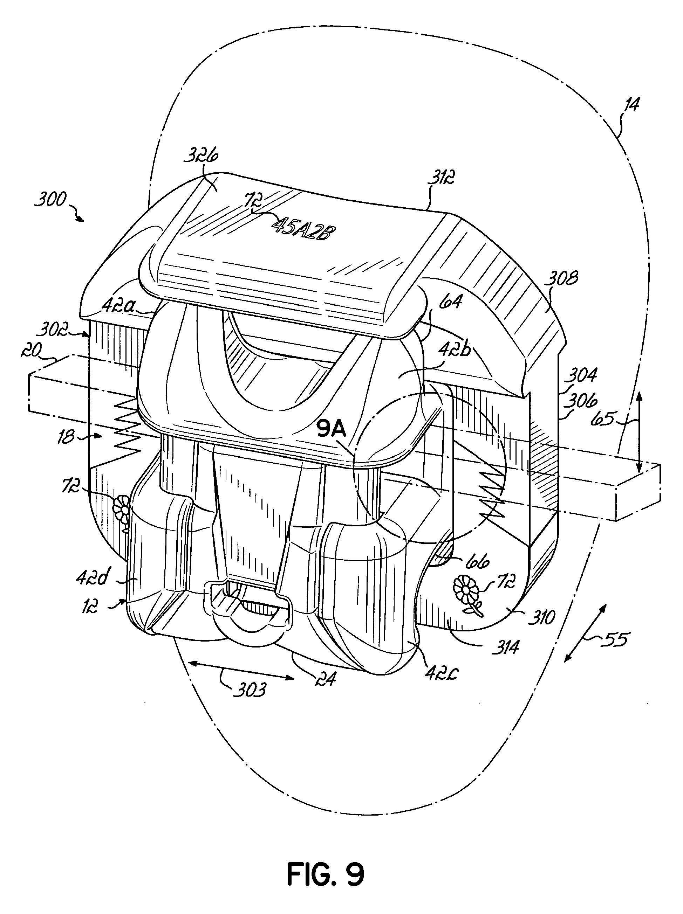

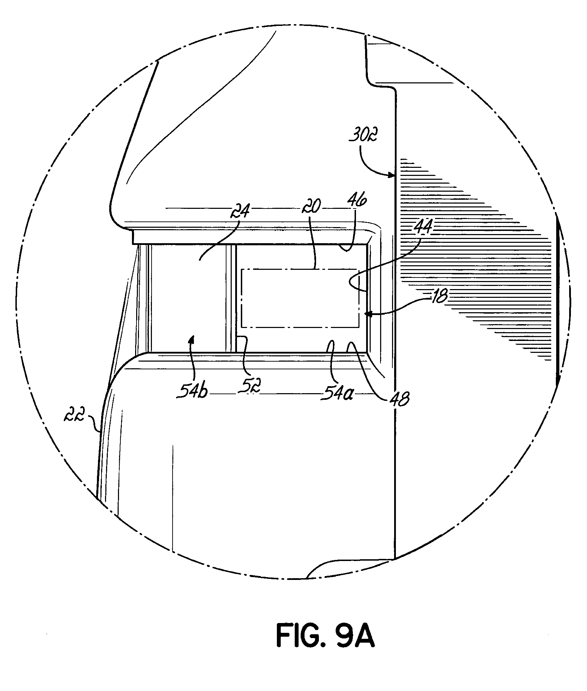

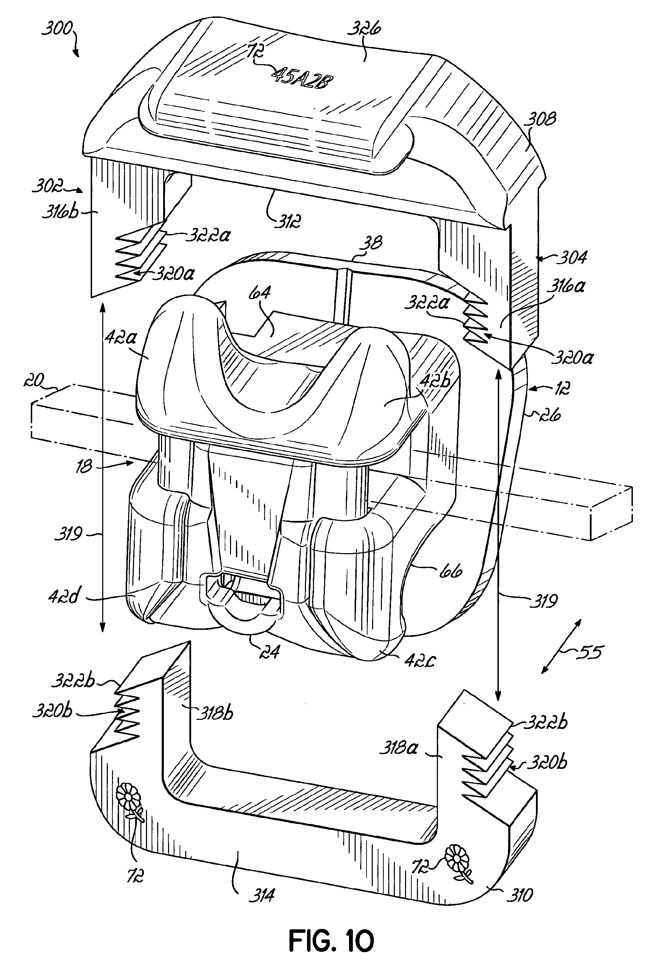

With reference to Figs. 9, 9A, and 10, in which like reference numerals refer to like features of Figs. 1-2, another embodiment of an orthodontic apparatus 300 includes a bite bumper or orthodontic member 302 coupled to the bracket 12. As shown, the orthodontic member 302 includes an engaging member 304 in the form of a closed loop 306 that engages the recesses 64, 66 (shown best in Fig. 10) between tie wings 42a, 42b, 42c, 42d of the body 22 and pad 38. Engaging member 304 includes first and second generally C-shaped body portions 308, 310, each having a central portion 312, 314, respectively. The occlusal central portion 312 has mesial and distal leg portions 316a, 316b that are configured to extend from the central portion 312 in the gingival direction. Similarly, the gingival central portion 314 has mesial and distal leg portions 318a, 318b that are configured to extend from the central portion 314 in the occlusal direction. The first and second body portions 308, 310 are configured to be coupled to one another to form the closed loop 306, as is shown in Fig. 9. The closed loop 306 is, therefore, defined by the central portions 312, 314 and the mesial and distal leg portions 316a, 316b, 318a, 318b.

As shown in Figs. 9 and 10, in one embodiment, the body portions 308, 310 may be configured to be coupled together where the mesial leg portions 316a and 318a form the mesial side of the closed loop 306. Similarly, the distal leg portions 316b and 318b form the distal side of the closed loop 306. The body portion 308, 310 may be coupled, for example, where the leg portions 316a, 316b, 318a, 318b have respective complementarily-shaped engagement surfaces 320a, 320b. For example, engagement surfaces 320a, 320b may include respective serrations 322a, 322b that permit the first body portion 308 to be coupled to the second body portion 310. The serrations 322a, 322b may include a plurality of teeth which may be oriented to ease installation of the orthodontic member 302, but make accidental separation of the first body portion 308 from the second body portion 310 unlikely. The ratchet-type coupling between the first and second body portions 308, 310 permits a unidirectional snap-fit coupling, such that engagement between the engagement surfaces 320a, 320b is easier than disengagement thereof. In this regard, during deployment, the leg portions 316a, 316b, 318a, 318b may be moved toward one another generally along the occlusal-gingival direction (i.e., in the general direction of arrows 319, see Fig. 10), such that the respective serrations 322a, 322b ratchedly engage one another, thereby facilitating secure coupling between the first and second body portions 308, 310 and forming of the closed loop 306. However, other alternative, but suitable, structures may provide coupling between the first and second body portions 308, 310. In this regard, for example, the first and second body portions 308, 310 may instead be adhesively coupled to one another or coupled via fasteners such as screws, pins or the like, on, at, or through the engagement surfaces 320a, 320b.

While the embodiment of Figs. 9 and 10 includes first and second body portions 308, 310 that are coupled to one another generally along the occlusal-gingival direction (arrow 319), it is contemplated that an alternative embodiment may have first and second body portions that are coupled along a direction transverse to the occlusal-gingival direction (not shown). For example, and without limitation, they may be coupled generally along a mesial-distal direction.

When the first and second body portions 308, 310 are coupled to one another, a bumping member 326 extends outwardly from the first body portion 308 and in the buccal-lingual direction (arrow 55). The bumper 326 is consequently positioned substantially occlusally of the bracket 12 and covers at least a portion of the occlusal side 28 of the bracket 12 to prevent or reduce the likelihood of contact between bracket 12 and opposing teeth, for example. In this exemplary embodiment, the bumper 326 is integrally formed with the first body portion 308, though the bumper 326 may be a separate component that is secured to the first body portion 308 with adhesives or by another technique known in the art.

In one embodiment, the dimensions of the member 302 may be configured specifically for a particular bracket to improve the likelihood that the bumper 326 remains properly located. In this regard, a close fit of the engaging member 304 within the recesses 64, 66 of bracket 12 may restrict movement of the orthodontic member 302 relative to the bracket 12. Specifically, a close fit may restrict occlusal-gingival motion (arrow 65), labial-lingual motion (arrow 55), as well as restricting motion in other lateral (e.g., arrow 303) and rotational directions. As set forth above with orthodontic members 16, 104, and 204, the coupling of the engaging member 304 with the bracket 12 is such that the engaging member 304 is in non-contact relation with the archwire 20 and thus does not actively engage the archwire 20 during orthodontic treatment. Specifically, as shown best in Fig. 9A, the engaging member 304 does not encroach upon the engaging portion 54a, which is defined by portions of the base surface 44, opposed slot surfaces 46, 48, and the lingual side 52 of the ligating slide 24. Thus, like previous embodiments, in one embodiment, the orthodontic member 302 does not define any portion of the encasing portion 54a nor does it come into contact with the archwire 20 on either the mesial or distal sides 32, 34 of the bracket 12. However, unlike embodiments set forth above, in which the orthodontic members were configured to be positioned labially of the archwire 20, in this embodiment, the orthodontic member 304 is positioned lingually of the archwire slot 18 (i.e., between the tooth surface and the archwire 20). This placement may be advantageous in that the insertion and removal of the archwire 20 from the archwire slot 18 may not require prior removal of the orthodontic member 302 from the bracket 12. Accordingly, the orthodontic member 302 may ease replacement of the archwire 20 during treatment.

Like the previous embodiments, the orthodontic member 302 may include decorative elements such as colors and/or decorative prints (e.g., numbers, letters, stars, flowers) associated with a surface of the orthodontic member 302. The decorative elements and identifying indicia are generally assigned the numeral 72. In this regard, different portions of orthodontic member 302 may include colors that are different from one another. Further, orthodontic member 302 may include identifying indicia (e.g., numbers, letters, other characters or symbols or combinations thereof) on its surface permitting identification of the particular orthodontic member 302 and/or identification of a particular combination of orthodontic member 302 and bracket 12 (or another type of bracket). These may be present in any number and/or combination and may be located anywhere on the orthodontic member 302. For example, and without limitation, these decorative elements and/or identifying indicia may be located on one or more of the first and second body portions 308, 310 and/or bumper 326.

In addition, orthodontic member 302 may be made of a variety of suitable materials, though these may differ from the materials that any of the orthodontic members 16, 104, 204 are made from. In part, the orthodontic member 302 may be made of relatively rigid materials rather than elastic materials, because the direct engagement of the first body portion 308 with the second body portion 310 does not require stretching of either first or second body portions 308, 310 around the occlusal tie wings 42a, 42b or gingival tie wings 42c, 42d. For example, the engaging member 304 may be made of a material that includes a polycarbonate.

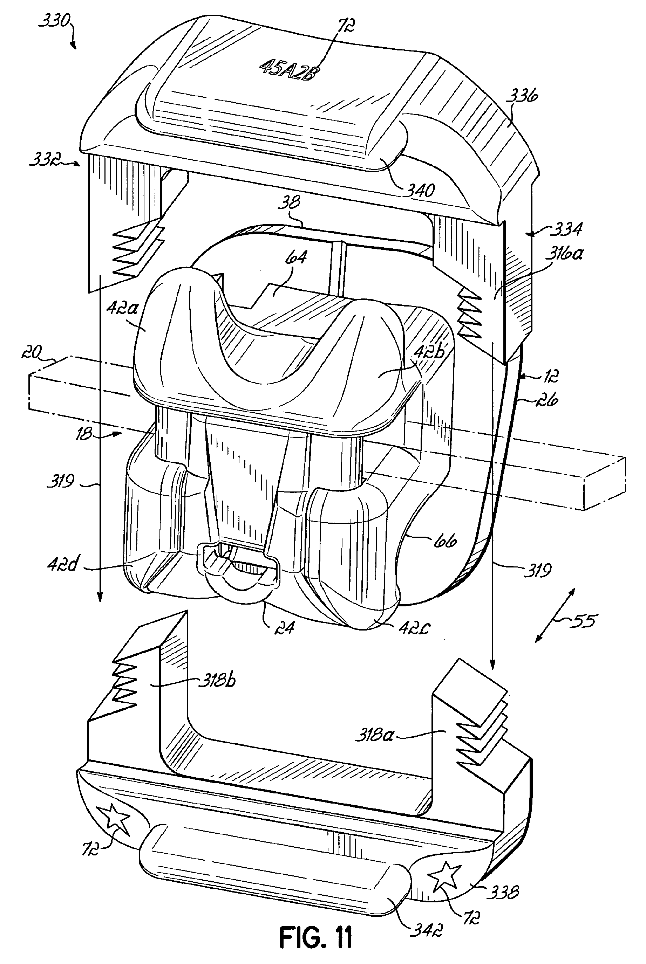

With reference to Fig. 11, in which like reference numerals refer to like features in Figs. 1-2 and Figs. 9 and 10, another embodiment of an orthodontic apparatus 330 is similar to orthodontic apparatus 300, the description of which may be referred to for an understanding of apparatus 330. Orthodontic apparatus 330 includes an orthodontic member 332 configured to be secured to the bracket 12, as shown. The orthodontic member 332 includes an engaging member 334 that permits coupling thereof with the bracket 12. As with orthodontic members set forth above, the engaging member 334 does not contact the archwire 20, exert drag or active forces tending to resist relative motion between the bracket 12 and the archwire 20, or otherwise effect the relative movement between the two. To this end, engaging member 334 has first and second body portions 336, 338, similar to the first and second body portions 308, 310 of the exemplary orthodontic member 302 shown in Figs. 9 and 10. Orthodontic member 332 includes a first bumper 340 that extends from the first body portion 336 and a second bumper 342 that extends from the second body portion 338. The first bumper 340 may be similar to the bumper 326, described above. The second bumper 342 may be positioned substantially gingivally of the bracket 12. In this exemplary embodiment, the second bumper 342 may be integrally formed with the second body portion 338 or may be a separate component that is secured to body portion 338. Second bumping member 342 extends generally in the buccal-lingual direction (arrow 55) to prevent or reduce the likelihood of contact between bracket 12 and other parts of the mouth, especially surrounding tissue. The second bumper 342 may, for example, be desirable with patients having tight musculature or a tight orbicularis oris to provide comfort to the patient during the orthodontic treatment period.

While the present invention has been illustrated by a description of various embodiments and while these embodiments have been described in considerable detail, additional advantages and modifications will readily appear to those of ordinary skill in the art.

## Claims

1. An orthodontic member for use with an orthodontic bracket having a tie wing and an archwire slot configured to receive an archwire therein, comprising a main body configured to cover at least a portion of the bracket when said orthodontic member is coupled to the bracket, an engaging member extending from said main body and configured to engage the tie wing to removably couple said orthodontic member to the bracket, wherein when the archwire is positioned in the archwire slot and said orthodontic member is coupled to the bracket, said orthodontic member and the archwire are in non-contact relation with each other such that said orthodontic member exerts no active forces on the archwire, and a nub extending from said main body and configured to project into the archwire slot so as to be in non-contact relation with the archwire.

2. An orthodontic member for use with an orthodontic bracket having a tie wing, an archwire slot configured to receive the archwire therein, and a movable closure member, said movable closure member being positionable relative to said archwire slot in an open position to allow insertion of the archwire therein, and in a closed position to capture the archwire within said archwire slot, the orthodontic member being decorative and being configured to be removably coupled to said bracket, said decorative orthodontic member comprising, a main body being configured to cover at least a portion of said bracket when said decorative orthodontic member is coupled to said bracket, and an engaging member extending from said main body and being configured to engage said tie wing to removably couple said decorative orthodontic member to said bracket, wherein when the archwire is captured in said archwire slot and said decorative orthodontic member is coupled to said bracket, said decorative orthodontic member and the archwire are in non-contact relation with each other such that said decorative orthodontic member exerts no active forces on the archwire.

3. The orthodontic member of either claim 1 or claim 2, further comprising a first bumper extending from said engaging member and configured to cover a first side of the bracket when said orthodontic member is coupled to the bracket.

4. An orthodontic member for use with an orthodontic bracket having a tie wing and an archwire slot configured to receive an archwire therein, comprising an engaging member configured to engage the tie wing to removably couple said orthodontic member to the bracket, wherein when the archwire is positioned in the archwire slot and said orthodontic member is coupled to the bracket, said orthodontic member and the archwire are in non-contact relation with each other such that said orthodontic member exerts no active forces on the archwire, and a first bumper extending from said engaging member and configured to cover a first side of the bracket when said orthodontic member is coupled to the bracket.

5. The orthodontic member of claim 2 or claim 4, further comprising a nub extending from said main body and configured to project into the archwire slot so as to be in non-contact relation with the archwire when said orthodontic member is coupled to the bracket.

6. The orthodontic member of either claim 1 or claim 5, wherein the movable closure member has opposed first and second sides, said orthodontic member further comprising a pair of nubs extending from said main body and configured to project into the archwire slot so as to be in non-contact relation with the archwire, said nubs configured to be positioned one on each of the first and second sides of the movable closure member when said orthodontic member is coupled to the bracket.

7. The orthodontic member of either claim 3 or claim 4, further comprising a support pad projecting from said first bumper, said support pad being shaped to cooperate with the bracket so as to limit movement of said orthodontic member relative to the bracket when said orthodontic member is coupled to the bracket.

8. The orthodontic member of claim 7, wherein the bracket further includes two tie wings and wherein said support pad is configured to reside intermediate the two tie wings so as to engage at least one of the tie wings to limit movement of said orthodontic member relative to the bracket.

9. The orthodontic member of any one of claims 3, 4, 7 or 8, wherein said engaging member comprises a first body portion having a first engagement surface, said first bumper extending from said first body portion, and a second body portion having a second engagement surface, wherein said first and second engagement surfaces are configured to engage one another to releasably couple said first body portion to said second body portion so as to define a closed loop about the bracket when said orthodontic member is coupled to the bracket.

10. The orthodontic member of claim 9, wherein said first and second engagement surfaces include complimentary serrated surfaces that facilitate coupling of the first and second body portions.

11. The orthodontic member of either claim 9 or claim 10, wherein said engaging member is configured to be coupled to the bracket so as to be intermediate a tooth to which the bracket is coupled and the archwire.

12. The orthodontic member of any one of claims 3, 4, 7, 8 and 9 to 11, further comprising a second bumper extending from said second body portion configured to cover a second side of the bracket when said orthodontic member is coupled to the bracket.

13. The orthodontic member of any preceding claim, wherein said engaging member includes a stretchable closed loop.

14. The orthodontic member of any preceding claim, further comprising a decorative element associated with said orthodontic member.

15. An orthodontic apparatus comprising an orthodontic bracket configured to be mounted on a tooth, said bracket including a tie wing, an archwire slot configured to receive the archwire therein, and a movable closure member, said movable closure member being positionable relative to said archwire slot in an open position to allow insertion of the archwire therein, and in a closed position to capture the archwire within said archwire slot and an orthodontic member as claimed in any preceding claim.
